# EUROPEAN PATENT APPLICATION

(11) **EP 1 726 846 A1**
(43) Date of publication of application: **29.11.2006**
(21) Application number: 05010868.7
(22) Date of filing: 19.05.2005
(51) Int. Cl.: F16F 15/04

(54) **Vibration-reducing device and method thereof**

(71) Applicant: Coretronic Corporation, Chu-Nan 350, Miao-Li County (TW)
(72) Inventor: Chen, Kuo-Wen c/o Coretronic Corporation, Chu-Nan 350 Miao-Li County (TW)
(74) Representative: Wagner, Bernhard Peter

(57) **Abstract**

A vibration-reducing device and method thereof are applied to an image-projecting apparatus. The vibration-reducing device includes a damping mechanism. One end of the damping mechanism is connected to the image-projecting apparatus, and the other end of the damping mechanism is connected to a housing, where the image-projecting apparatus is installed thereon. When the image-projecting apparatus is caused to vibrate by an external force, the damping mechanism generates an opposite force with respect to the external force, so as to reduce the vibration.

## Description

### BACKGROUND OF THE INVENTION 1.

### Field of the invention

The invention relates to a vibration-reducing device, and more particularly to a device for reducing the vibration caused by an external force in an image-projecting apparatus.

### 2. Description of the prior art

A rear projection television (TV) utilizes an image-projecting apparatus installed therein to project images onto the screen for a user. Thus, the position of the projected image must be adjusted precisely, so that the image can be accurately displayed on the screen.

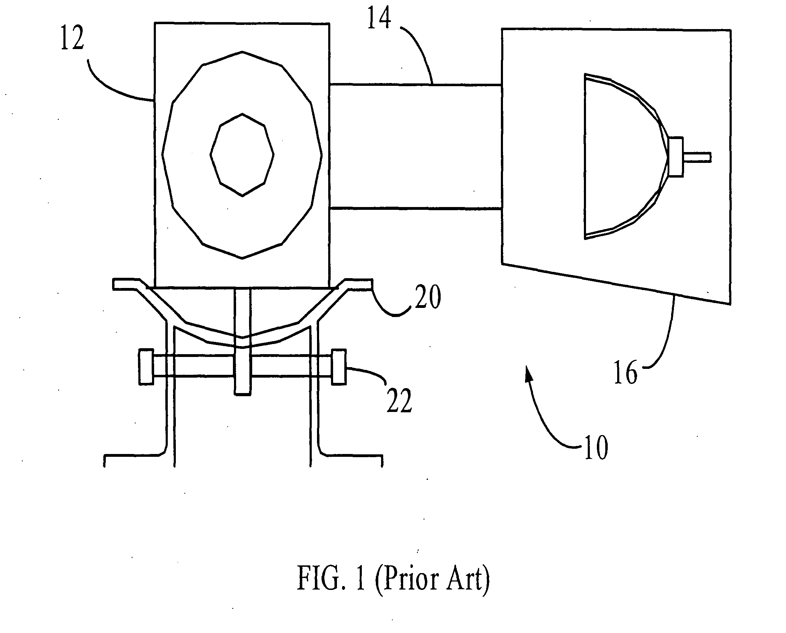

Referring to FIG. 1, FIG. 1 is a schematic diagram illustrating an image-projecting apparatus 10 of the prior art. The image-projecting apparatus 10 includes a lens module 12, a connecting module 14, and a light source module 16. An adjusting stand 20 is configured below the lens module 12 to fix the image-projecting apparatus 10. The adjusting stand 20 includes a screw rod 22 for adjusting the position of the image-projecting apparatus 10. The connecting module 14 connects the light source module 16 and the lens module 12, such that the light source module 16 is suspended in midair.

When the rear projection TV is manufactured, the adjusting stand 20 is used for adjusting the image-projecting apparatus 10 to an appropriate position. However, after the TV leaves the factory and especially when the TV is transported to somewhere, because the light source module 16 is suspended in midair, there will be vibration or wobble. Accordingly, the position of the light source module 16 of the image-projecting apparatus 10 will deviate from the original position being calibrated, so that the image cannot be accurately focused and clearly displayed on the screen.

Therefore, the invention discloses a vibration-reducing device for reducing the vibration of an image-projecting apparatus, so as to solve the above-mentioned problems of the prior art.

### SUMMARY OF THE INVENTION

An objective of the invention discloses a vibration-reducing device and method thereof to solve the above-mentioned problems of the prior art.

Another objective of the invention discloses a vibration-reducing device utilizing the damping mechanism to reduce the vibration of the image-projecting apparatus.

Still another objective of the invention discloses a vibration-reducing device utilizing the supporting stick to reduce the vibration of the image-projecting apparatus.

To achieve the above-mentioned objectives, the vibration-reducing device and method thereof of the invention applied in the image-projecting apparatus includes a damping mechanism. One side of the damping mechanism is connected to the image-projecting apparatus, and the other side is connected to a housing of the image-projecting apparatus. When the image-projecting apparatus is caused to vibrate by an external force, the damping mechanism generates an opposite force with respect to the external force, so as to reduce the vibration of the image-projecting apparatus.

Therefore, the vibration-reducing device and method thereof of the invention can reduce the vibration or wobble when the light source module of the image-projecting apparatus is being transported to somewhere and then prevent the image-projecting apparatus from being damaged by the vibration. The vibration-reducing device disclosed by the invention not only overcomes the above-mentioned problems of the prior art, but further keeps the image-projecting apparatus substantially restore to and maintain in the predetermined projecting position before vibration.

The advantage and spirit of the invention may be understood by the following recitations together with the appended drawings.

### BRIEF DESCRIPTION OF THE APPENDED DRAWINGS

FIG. 1 is a schematic diagram illustrating an image-projecting apparatus of the prior art.

FIG. 2 is a schematic diagram illustrating a vibration-reducing device according to the first preferred embodiment of the invention.

FIG. 3 is a schematic diagram illustrating a vibration-reducing device according to the second preferred embodiment of the invention.

FIG. 4 is a schematic diagram illustrating a vibration-reducing device according to the third preferred embodiment of the invention.

FIG. 5 is a schematic diagram illustrating a vibration-reducing device according to the fourth preferred embodiment of the invention.

FIG. 6 is a schematic diagram illustrating a vibration-reducing device according to the fifth preferred embodiment of the invention.

FIG. 7 is a schematic diagram illustrating a vibration-reducing device according to the sixth preferred embodiment of the invention.

FIG. 8 is a schematic diagram illustrating a vibration-reducing device according to the seventh preferred embodiment of the invention.

FIG. 9 is a flowchart illustrating the vibration-reducing method according to the invention.

### DETAILED DESCRIPTION OF THE INVENTION

To achieve the above-mentioned objectives, the means and the features of the invention are described in detail in the following preferred embodiments together with FIGs. 1 through 9 respectively.

### The first preferred embodiment:

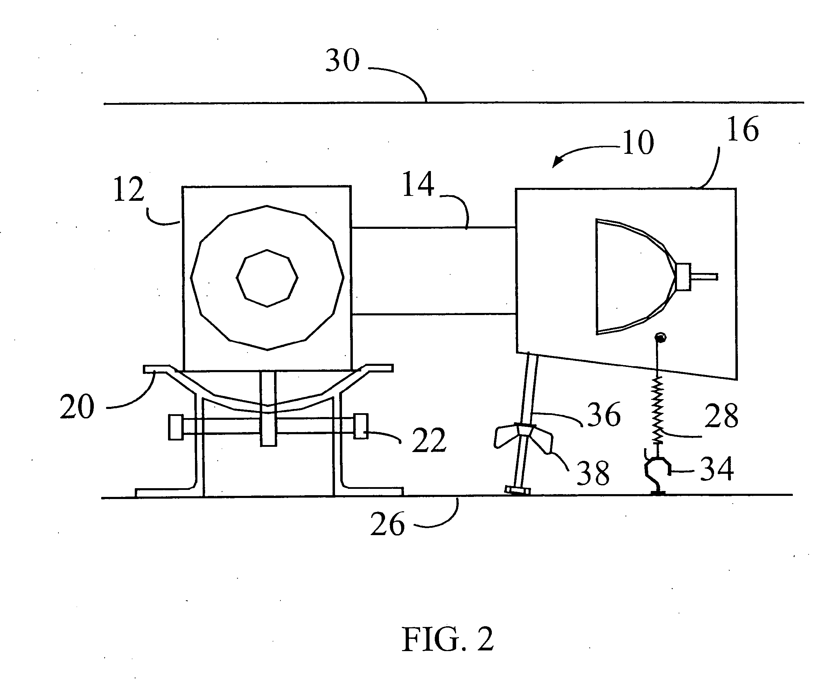

Referring to FIG. 2, FIG. 2 is a schematic diagram illustrating a vibration-reducing device according to the first preferred embodiment of the invention. The vibration-reducing device is applied in the image-projecting apparatus 10, and the vibration-reducing device together with the image-projecting apparatus 10 is installed in a housing of an electronic apparatus. The electronic apparatus can be a perpendicular rear projection TV. The housing includes a first base 26 and a second base 30. The image-projecting apparatus 10 is attached onto the first base 26 and kept with a predetermined projecting position. The image-projecting apparatus 10 includes a lens module 12, a connecting module 14, and a light source module 16. The connecting module 14 is used for connecting the lens module 12 and the light source module 16.

An adjusting stand 20 is configured below one side of the image-projecting apparatus 10 (i.e. the lens module 12), and a vibration-reducing device is installed below the other side of the image projection device 10 (i.e. the light source module 16). The adjusting stand 20 is used for fixing the image-projecting apparatus 10 and includes a screw rod 22 for adjusting the position of the image-projecting apparatus 10. The vibration-reducing device includes a damping mechanism and a supporting stick 36. The damping mechanism and the supporting stick 36 are both installed on the same side of the image-projecting apparatus 10. The damping mechanism is an extension spring 28. One end of the extension spring 28 is detachably connected to the image-projecting apparatus 10, and the other end is connected to the first base 26 by a hook 34. Furthermore, one end of the supporting stick 36 is connected to the image-projecting apparatus 10, and the other end is against the first base 26. The supporting stick 36 has a wing nut 38 for adjusting the length of the supporting stick 36. Whenever the image-projecting apparatus 10 is being adjusted, the wing nut 38 is being loosed to adjust the length of the supporting stick 36 to keep a distance from the base 26, and then the adjusting stand 20 is used to adjust the position of the image-projecting apparatus 10. After the image-projecting apparatus 10 is adjusted to the desired position, the supporting stick 36 is adjusted to be against the base 26, and then the wing nut 38 is tightened. Accordingly, the installation of the supporting stick 36 is completed.

When the image-projecting apparatus 10 is caused to vibrate by an external force, the extension spring 28 will pull down the image-projecting apparatus 10 to be against upward movement, and the supporting stick 36 will restrain the image-projecting apparatus 10 to be against downward movement. Accordingly, the influence of the vibration caused by the external force is reduced, so as to keep the image-projecting apparatus 10 substantially in the predetermined projecting position.

### The second preferred embodiment:

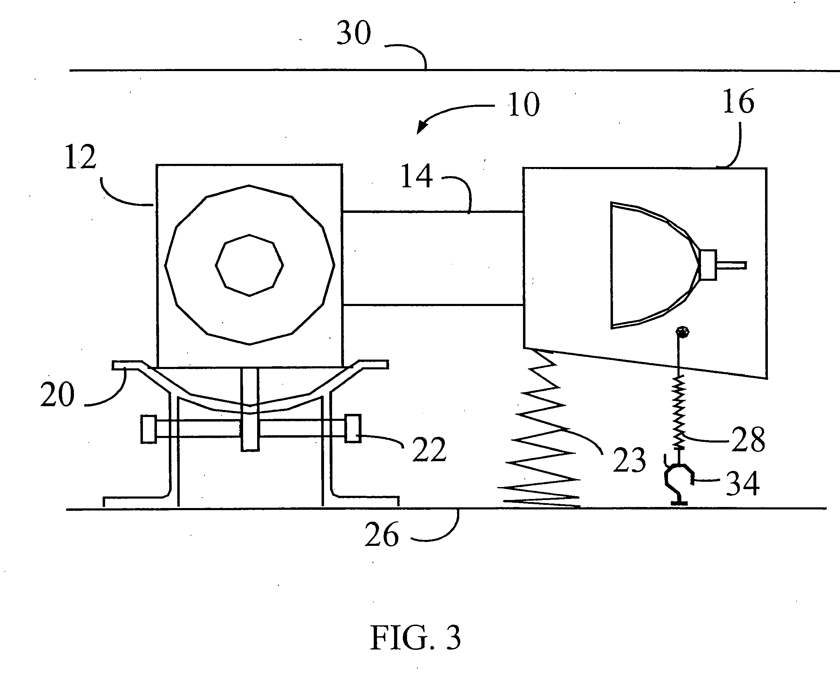

Referring to FIG. 3, FIG. 3 is a schematic diagram illustrating a vibration-reducing device according to the second preferred embodiment of the invention. Compared to the first preferred embodiment, the second preferred embodiment does not install a supporting stick and the damping mechanism consists of an extension spring 28 and a first compression spring 23. The extension spring 28 is configured below the light source module 16, and each end thereof is respectively connected to the light source module 16 and the base 26, so as to prevent the light source module 16 from moving upward. Whenever the image-projecting apparatus 10 moves upward due to the vibration, the extension spring 28 will correspondingly generate a pulling force to prevent the light source module 16 from moving upward. The first compression spring 23 is configured below the light source module 16, wherein one end thereof is fixed on the first base 26 and the other end thereof is attached to the light source module 16, so as to prevent the light source module 16 from moving downward. Whenever the image-projecting apparatus 10 moves downward due to the vibration, the first compression spring 23 will correspondingly generate a pressing force to prevent the light source module 16 from moving downward. Accordingly, the influence of the vibration caused by the external force is reduced by the mutual action between the extension spring 28 and the first compression spring 23, so as to keep the image-projecting apparatus 10 substantially restored to and maintained in the predetermined projecting position before vibration.

### The third preferred embodiment:

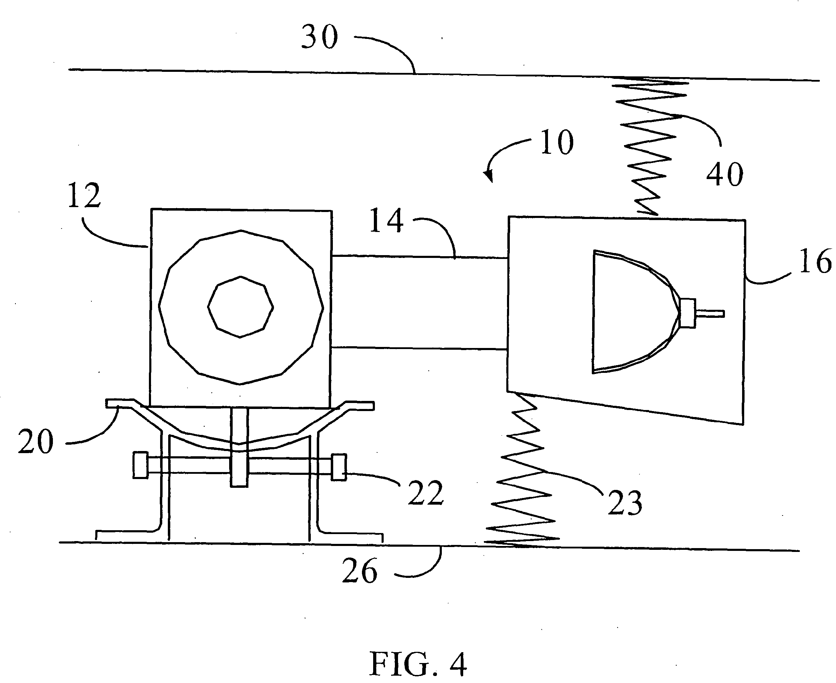

Referring to FIG. 4, FIG. 4 is a schematic diagram illustrating a vibration-reducing device according to the third preferred embodiment of the invention. Compared to the first preferred embodiment, the third preferred embodiment does not install a supporting stick, and the damping mechanism consists of a first compression spring 23 and a second compression spring 40. The first compression spring 23 is configured below the light source module 16, wherein one end thereof is fixed on the first base 26 and the other end thereof is attached to the light source module 16, so as to prevent the light source module 16 from moving downward. Whenever the image-projecting apparatus 10 moves downward due to the vibration, the first compression spring 23 will correspondingly generate a pressing force to prevent the light source module 16 from moving downward. The second compression spring 40 is configured above the light source module 16, wherein one end thereof is fixed on the second base 30 and the other end thereof is attached to the light source module 16, so as to prevent the light source module 16 from moving upward. Whenever the image-projecting apparatus 10 moves upward due to the vibration, the second compression spring 40 will correspondingly generate a pressing force to prevent the light source module 16 from moving upward. Accordingly, the influence of the vibration caused by the external force is reduced by the upward and downward forces, which are generated by the first compression spring 23 and the second compression spring 40, so as to keep the image-projecting apparatus 10 substantially restored to and maintained in the predetermined projecting position before vibration.

### The fourth preferred embodiment:

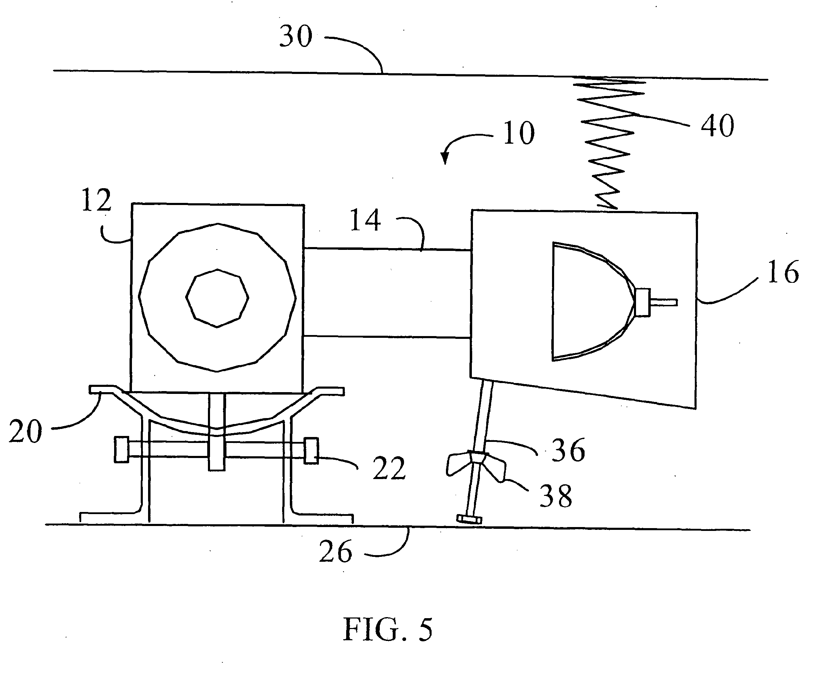

Referring to FIG. 5, FIG. 5 is a schematic diagram illustrating a vibration-reducing device according to the fourth preferred embodiment of the invention. Compared to the first preferred embodiment, the supporting stick 36 in the fourth preferred embodiment is installed below the light source module 16, and the damping mechanism consists of a second compression spring 40 configured above the light source module 16, as shown in FIG. 5. One end of the second compression spring 40 is fixed on the second base 30, and the other end is attached to the light source module 16, so as to prevent the light source module 16 from moving upward. Whenever the image-projecting apparatus 10 moves upward due to the vibration, the second compression spring 40 will correspondingly generate a pressing force to prevent the light source module 16 from moving upward. Accordingly, the influence of the vibration caused by the external force is reduced by the upward and downward forces, which are generated by the supporting stick 36 and the second compression spring 40, so as to keep the image-projecting apparatus 10 substantially restored to and maintained in the predetermined projecting position before vibration.

### The fifth preferred embodiment:

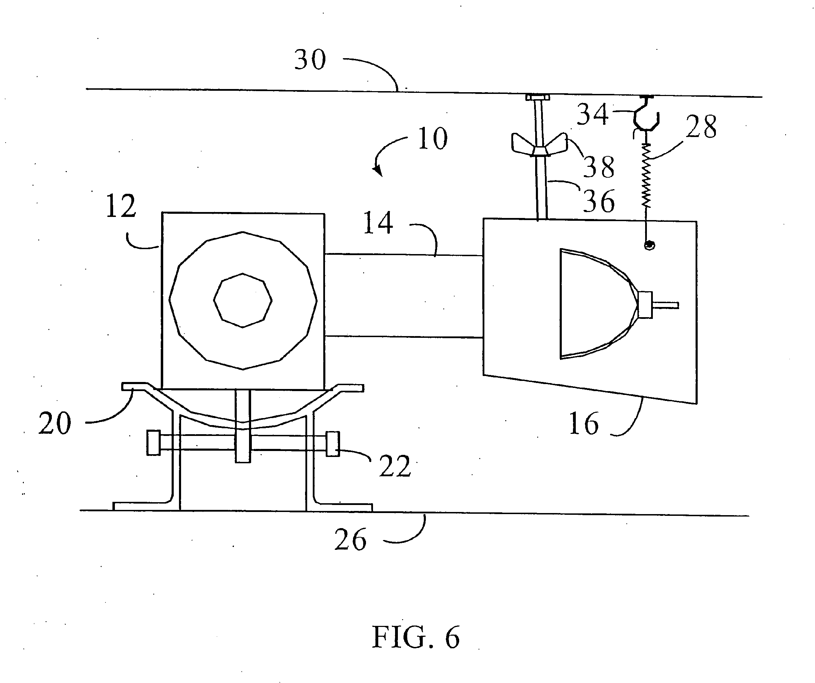

Referring to FIG. 6, FIG. 6 is a schematic diagram illustrating a vibration-reducing device according to the fifth preferred embodiment of the invention. Compared to the first preferred embodiment, the extension spring 28 in the fifth preferred embodiment is installed above the light source module 16, wherein one end thereof is connected to the light source module 16, and the other end thereof is connected to the second base 30 by a hook 34. The supporting stick 36 is installed above the light source module 16. Whenever the image-projecting apparatus 10 moves upward due to the vibration, the supporting stick 36 will restrain the light source module 16 from moving upward. On the other hand, whenever the image-projecting apparatus 10 moves downward due to the vibration, the extension spring 28 will generate an upward force to prevent the image-projecting apparatus 10 from moving downward. Accordingly, the influence of the vibration caused by the external force is reduced by the mutual action between the supporting stick 36 and the extension spring 28, so as to keep the image-projecting apparatus 10 substantially restored to and maintained in the predetermined projecting position before vibration.

### The sixth preferred embodiment:

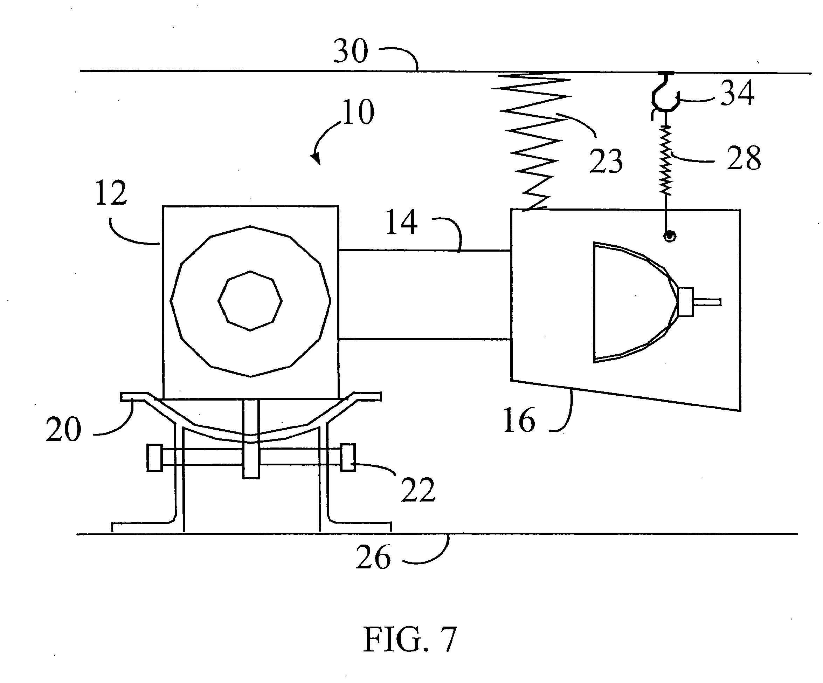

Referring to FIG. 7, FIG. 7 is a schematic diagram illustrating a vibration-reducing device according to the sixth preferred embodiment of the invention. Compared to the second preferred embodiment, the draw spring 28 in the sixth preferred embodiment is configured above the light source module 16, wherein one end thereof is connected to the light source module 16, and the other end thereof is connected to the second base 30 by a hook 34, so as to prevent the light source module 16 from moving downward. Whenever the image-projecting apparatus 10 moves downward due to the vibration, the extension spring 28 will correspondingly generate a pulling force to prevent the light source module 16 from moving downward. The first compression spring 23 is configured above the light source module 16, wherein one end thereof is fixed on the second base 30, and the other end thereof is attached to the light source module 16, so as to prevent the light source module 16 from moving upward. Whenever the image-projecting device 10 moves upward due to the vibration, the first compression spring 23 will correspondingly generate a pressing force to prevent the light source module 16 from moving upward. Accordingly, the influence of the vibration caused by the external force is reduced by the mutual action between the extension spring 28 and the first compression spring 23, so as to keep the image-projecting apparatus 10 substantially restored to and maintained in the predetermined projecting position before vibration.

### The seventh preferred embodiment:

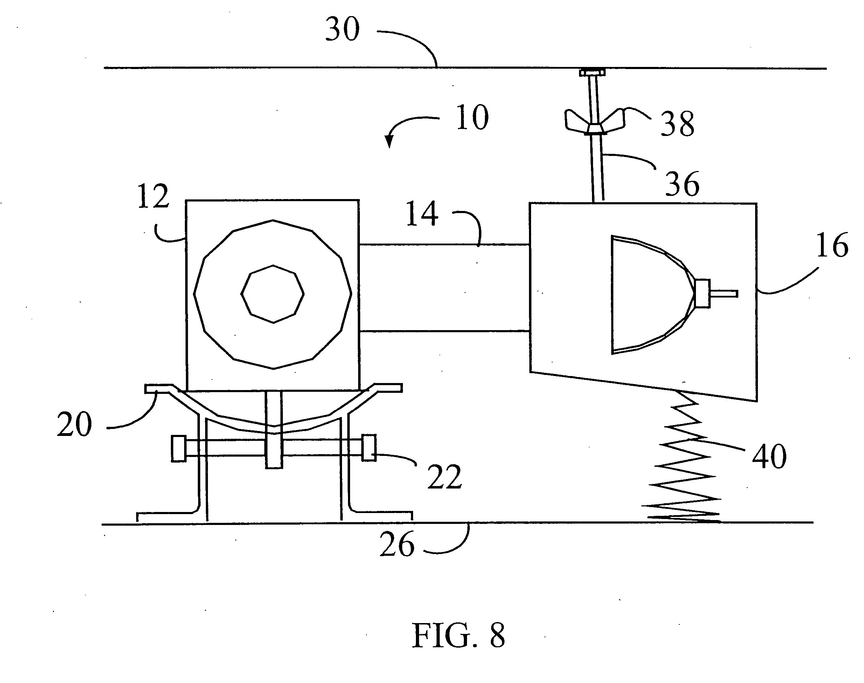

Referring to FIG. 8, FIG. 8 is a schematic diagram illustrating a vibration-reducing device according to the seventh preferred embodiment of the invention. Compared to the fourth preferred embodiment, the second compression spring 40 in the seventh preferred embodiment is configured below the light source module 16, wherein one end thereof is fixed on the first base 26, and the other end thereof is attached to the light source module 16, so as to prevent the light source module 16 from moving downward. Whenever the image-projecting apparatus 10 moves downward due to the vibration, the second compression spring 40 will correspondingly generate a pressing force to prevent the light source module 16 from ving downward. Furthermore, the supporting stick 36 is installed above the light source module 16 and used for preventing the light source module 16 from moving upward. Whenever the image-projecting apparatus 10 moves upward due to the vibration, the supporting stick 36 will restrain the image-projecting apparatus10 from moving upward. Accordingly, the influence of the vibration caused by the external force is reduced by the mutual action between the supporting stick 36 and the second compression spring 40, so as to keep the image-projecting apparatus 10 substantially restored to and maintained in the predetermined projecting.position before vibration.

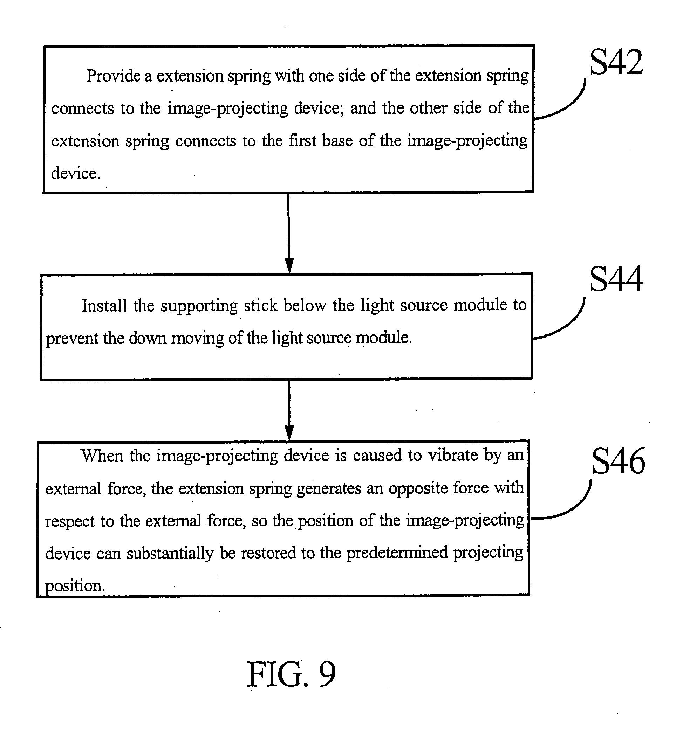

Referring to FIG. 2 and FIG. 9, FIG. 9 is a flowchart illustrating the vibration-reducing method according to the invention. The vibration-reducing method of the invention is used for reducing the vibration of the image-projecting apparatus. In a preferred embodiment, the image-projecting apparatus can be the image-projecting apparatus 10 shown in FIG. 2. According to a preferred embodiment of the invention, as shown in FIG. 2, the vibration-reducing method of the invention is used for reducing the vibration of the image-projecting apparatus 10. The image-projecting apparatus is installed on the first base 26 to be kept in a predetermined projecting position. The vibration-reducing method of the invention provides a damping mechanism and a supporting stick 36, and the damping mechanism consists of an extension spring 28. One end of the extension spring 28 is connected to the light source module 16 by a screw 32, and the other end is connected to the first base 26 by a hook 34, so as to prevent the light source module 16 from vibrating. When the image-projecting apparatus 10 is caused to vibrate by an external force, the extension spring 28 will generate an opposite force with respect to the external force, so as to keep the image-projecting apparatus 10 substantially restored to and maintained in the predetermined projecting position before vibration. The vibration-reducing method of the invention includes the following steps:
Step S42: Provide an extension spring 28 via one end thereof connected to the image-projecting apparatus 10 and via the other end thereof connected to the first base 26 where the image-projecting apparatus 10 is installed thereon;
Step S44: Install the supporting stick 36 below the light source module 16 to prevent the light source module 16 from moving downward.

In the vibration-reducing method of the invention, when the image-projecting apparatus 10 is caused to vibrate by an external force, the extension spring 28 will generate an opposite force with respect to the external force, so as to keep the image-projecting apparatus substantially restore to and maintain in the predetermined projecting position before vibration.

According to the vibration-reducing device and method thereof used in an image-projecting apparatus, the damping mechanism can generate an opposite force with respect to the external force, so as to keep the image-projecting apparatus 10 substantially restored to and maintained in the predetermined projecting position before vibration. The vibration-reducing device and method thereof of the invention can reduce the vibration or wobble for the light source module of the image-projecting apparatus as being transported to somewhere, so as to prevent the image-projecting apparatus from being damaged by vibration. Furthermore, after vibration, the invention can keep the image-projecting apparatus 10 substantially restored to and maintained in the correct projecting position. Accordingly, the consumer can save the time and avoid the trouble without sending back the image-projecting apparatus 10 to the manufacturer for adjustment.

Moreover, the invention discloses a vibration-reducing device for preventing the image-projecting apparatus from cracking or being damaged by the external force or vibration. In other words, instead of firm fixing the image-projecting apparatus on the housing, the vibration-reducing device of the invention reduces the influence of the vibration caused by the external force for the image-projecting apparatus, so as to keep the image-projecting apparatus substantially restored to and maintained in the predetermined projecting position before vibration.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A vibration-reducing device in an image-projecting apparatus, the image-projecting apparatus being installed in a housing and kept in a predetermined projecting position, the vibration-reducing device comprising:
a damping mechanism, one end of the damping mechanism being connected to the image-projecting apparatus and another end thereof being connected to the housing;
wherein when the image-projecting apparatus is caused to vibrate by an external force, the damping mechanism generates an opposite force with respect to the external force, so as to keep the image-projecting apparatus substantially in the predetermined projecting position.

2. The vibration-reducing device of claim 1, further comprising a supporting stick, one end of the supporting stick being connected to the image-projecting apparatus and the other end thereof being against the housing.

3. The vibration-reducing device of claim 2, wherein the damping mechanism and the supporting stick are both installed on the same side of the image-projecting apparatus, and the damping mechanism comprises an extension spring.

4. The vibration-reducing device of claim 2, wherein the damping mechanism and the supporting stick are installed on the opposite sides of the image-projecting apparatus, and the damping mechanism comprises a compression spring.

5. The vibration-reducing device of claim 1, wherein the damping mechanism comprises a compression spring and an extension spring, and the compression spring and the extension spring are both installed on the same side of the image-projecting apparatus.

6. The vibration-reducing device of claim 1, wherein the damping mechanism comprises a first compression spring and a second compression spring, and the first compression spring and the second compression spring are installed on the opposite sides of the image-projecting apparatus.

7. The vibration-reducing device of claim 1, wherein the damping mechanism comprises an extension spring.

8. The vibration-reducing device of claim 1, wherein the damping mechanism comprises a compression spring.

9. The vibration-reducing device of claim 1, wherein the image-projecting apparatus comprises a lens module and a light source module, and an adjusting stand is configured below the lens module, and the vibration-reducing device is installed between the light source module and the housing.

10. A vibration-reducing method used in an image-projecting apparatus, the image-projecting apparatus being installed in a housing and kept in a predetermined projecting position, the vibration-reducing method comprising:
providing a damping mechanism, one end of the damping mechanism being connected to the image-projecting apparatus and another end thereof being connected to the housing;
wherein when the image-projecting apparatus is caused to vibrate by an external force, the damping mechanism generates an opposite force with respect to the external force so as to keep the image-projecting apparatus substantially restored to and maintained in the predetermined projecting position before vibration.

11. An image-projecting apparatus having a vibration-reducing device installed in a housing and kept in a predetermined projecting position, the image-projecting apparatus comprising:
a light source module;
a lens module connected to the light source module;
an adjusting stand installed below the lens module; and
a damping mechanism installed between the light source module and the housing.

12. The image-projecting apparatus of claim 11, wherein the vibration-reducing device comprises a supporting stick and a damping mechanism.

13. The image-projecting apparatus of claim 12, wherein the damping mechanism and the supporting stick are both installed on the same side of the light source module, and the damping mechanism comprises an extension spring.

14. The image-projecting apparatus of claim 12, wherein the damping mechanism and the supporting stick are installed respectively on the opposite sides of the light source module, and the damping mechanism comprises a compression spring.

15. The image-projecting apparatus of claim 11, wherein the vibration-reducing device comprises an extension spring and a compression spring, and the compression spring and the extension spring are both installed on the same side of the light source module.

16. The image-projecting apparatus of claim 11, wherein the vibration-reducing device comprises a first compression spring and a second compression spring, and the first compression spring and the second compression spring are installed on the opposite sides of the light source module.
